# FASCICULE DE BREVET EUROPEEN

(11) **EP 4 095 527 B1**
(45) Date de publication et mention de la délivrance du brevet: **09.07.2025**
(21) Numéro de dépôt: 22173247.2
(22) Date de dépôt: 13.05.2022
(51) Int. Cl.: G01N 29/04, G01N 29/11, G01N 29/26, G01N 29/44

(54) **PROCÉDÉ ET SYSTÈME DE DÉTECTION ULTRASONORE DE DÉFAUTS INTERNES D'UNE PIÈCE, EN PARTICULIER POUR UN AÉRONEF**
VERFAHREN UND SYSTEM ZUR ULTRASCHALLDETEKTION VON INTERNEN DEFEKTEN EINES BAUTEILS, INSBESONDERE FÜR EIN LUFTFAHRZEUG
METHOD AND SYSTEM FOR ULTRASONIC DETECTION OF INTERNAL FAULTS OF A PART, IN PARTICULAR FOR AN AIRCRAFT

(30) Priorité: 27.05.2021 FR 2105549
(43) Date de publication de la demande: 30.11.2022
(73) Titulaire: AIRBUS OPERATIONS (SAS), 31060 Toulouse (FR)
(72) Inventeur: EMILE, Philippe, 31060 TOULOUSE (FR); GRIMAL, Marc, 31060 TOULOUSE (FR)
(74) Mandataire: Gevers & Orès

(56) Documents cités:
- DE-A1- 102012 025 535
- FR-A1- 3 085 095

## Description

### DOMAINE TECHNIQUE

La présente invention concerne un procédé et un système de détection ultrasonore de défauts internes d'une pièce, en particulier pour un aéronef.

### ETAT DE LA TECHNIQUE

Bien que non exclusivement, ce procédé est destiné plus particulièrement à apporter une aide au contrôle de pièces obtenues par une méthode de fabrication de type DED (pour "Direct Energy Deposition" en anglais), et en particulier à la fabrication de pièces destinées à des d'aéronefs, notamment des avions de transport.

De façon connue, une telle méthode de fabrication DED (ou dépôt sous énergie concentrée) est une méthode de fabrication additive (ou impression 3D) pour laquelle un matériau est déposé sur un support et de l'énergie thermique focalisée est utilisée pour fondre le matériau au fur et à mesure de son dépôt. Le matériau, une poudre ou un fil, est déposée par une buse, et est immédiatement fondue par un faisceau laser ou d'électrons, ou par des technologies de déposition à l'arc (par exemple par utilisation de plasma). Ce procédé est le plus souvent utilisé avec des poudres ou des fils métalliques (alliage à base d'aluminium, de titane ou de nickel, ...). La technologie DED présente plusieurs avantages par rapport à des procédés de fabrication additive métallique plus classiques, et notamment une vitesse de fabrication élevée et la fabrication possible de pièces de grandes dimensions.

On sait qu'une telle méthode de fabrication de type DED génère ou peut générer des défauts tels que des porosités ou des manques de fusion dans les pièces fabriquées. Dans le cadre de la présente invention, on entend par « défauts » internes d'une pièce, une absence au moins partielle de matière dans le matériau formant la pièce.

Les porosités sont, généralement, détectables par des méthodes usuelles par radiographie et mesures ultrasonores.

La difficulté lors de l'inspection de telles pièces fabriquées par un procédé DED concerne la détection de défauts linéaires, générés en raison d'un manque de fusion, qui peuvent présenter des formes et des orientations variées.

Les inspections usuelles réalisées par radiographie et mesures ultrasonores ne permettent pas de détecter de tels défauts ou uniquement très partiellement.

Il existe donc un besoin de disposer d'une solution permettant de détecter dans une pièce tout type de défaut, par exemple des défauts arrondis tels que des porosités ou des inclusions de matériau plus dense que le matériau déposé (« solid inclusion » en anglais) mais également des défauts linéaires tels que des manques de fusion, et ceci quelles que soient les orientations de ces défauts dans la pièce.

Par ailleurs, on connaît :
- par le document DE 10 2012 025 535 A1, une méthode d'analyse ultrasonore de pièces prévoyant de réaliser des mesures ultrasonores sur une zone d'intérêt de la pièce ; et
- par le document FR 3 085 095 A1, un procédé d'imagerie par ultrasons pour imager un objet, en particulier dans le cadre d'un contrôle non destructif d'objets, afin de détecter d'éventuels défauts.

### EXPOSÉ DE L'INVENTION

La présente invention a pour objet de répondre à au besoin précité. Pour ce faire, elle concerne un procédé de détection ultrasonore de défauts internes d'une pièce, en particulier pour un aéronef.

Selon l'invention, ledit procédé comporte au moins les étapes suivantes :
- une étape de mesure, mise en œuvre par un dispositif de mesure ultrasonore, consistant à réaliser des mesures sur une zone dite d'intérêt de la pièce, ladite zone d'intérêt étant divisée selon un maillage comprenant des cellules élémentaires, le dispositif de mesure ultrasonore comportant une pluralité d'émetteurs ultrasonores espacés les uns des autres et une pluralité de récepteurs ultrasonores espacés les uns des autres,
   l'étape de mesure consistant à réaliser successivement, cellule après cellule, pour chacune des cellules du maillage, une pluralité de suites d'opérations,
   lesdites suites d'opérations étant mises en œuvre successivement, émetteur ultrasonore après émetteur ultrasonore, à partir de chacun des émetteurs ultrasonores du dispositif de mesure ultrasonore,
   chacune des suites d'opérations comprenant les opérations suivantes : la génération par l'émetteur ultrasonore considéré d'un signal ultrasonore qui est envoyé dans la pièce et la mesure, par chacun des récepteurs ultrasonores du dispositif de mesure ultrasonore, de l'amplitude du signal ultrasonore correspondant, renvoyé par la cellule considérée de la pièce ;
- une étape de calcul, mise en œuvre par un élément de calcul, consistant à calculer, pour chacune des cellules du maillage, la somme des amplitudes de l'ensemble des mesures réalisées à l'étape de mesure pour cette cellule de manière à obtenir une amplitude dite globale pour ladite cellule ; et
- une étape de traitement, mise en œuvre par un élément de traitement, consistant au moins à déduire des amplitudes globales calculées pour l'ensemble des cellules du maillage, le cas échéant, la présence d'un ou de plusieurs défauts.

Dans le cadre de la présente invention, la zone d'intérêt correspond à une zone spatiale de la pièce dans laquelle on réalise une inspection ultrasonore.

Ainsi, grâce au maillage de la zone d'intérêt et à la réalisation de mesures dans toutes les cellules de ce maillage, on obtient des données pour toute la surface de la zone d'intérêt considérée, c'est-à-dire de la zone de la pièce que l'on souhaite inspecter. De plus, grâce à un agencement espacé des émetteurs et des récepteurs et au traitement de données obtenues à partir de tous les émetteurs et de tous les récepteurs agencés à des positions différentes sur le dispositif de mesure ultrasonique, on obtient pour chaque cellule des mesures réalisées selon des angles d'émission et de réception différents et variés, ce qui permet d'obtenir une image ultrasonore de chaque cellule sous des vues différentes. On est ainsi en mesure de détecter des défauts dans la pièce, qui présentant différentes orientations et formes.

Le procédé de détection ultrasonore permet donc de détecter tous les défauts existant dans la zone d'intérêt de la pièce, et ceci quelle que soit l'orientation spatiale de ce ou de ces défauts. Ledit procédé est particulièrement bien adapté à détecter des défauts linéaires générés lors de la mise en œuvre d'une méthode de fabrication de type DED. Toutefois, ce procédé peut également être utilisé pour détecter des défauts dans d'autres types de pièces, par exemple des soudures.

Dans un mode de réalisation préféré, l'étape de traitement consiste également à déterminer, le cas échéant, en fonction des amplitudes globales calculées pour l'ensemble des cellules du maillage, le contour d'un défaut dans le plan de la zone d'intérêt.

De plus, avantageusement, l'étape de traitement consiste également à calculer, le cas échéant, la longueur d'un défaut à partir de la longueur entre les deux cellules les plus éloignées entre elles parmi l'ensemble des cellules pour lesquelles a été détecté le défaut.

Par ailleurs, de façon avantageuse, le maillage comporte des cellules identiques de forme carrée, dont les côtés présentent une longueur supérieure à un dixième d'un critère dit d'acceptation.

En outre, avantageusement, l'étape de mesure consiste à générer un signal ultrasonore présentant une fréquence comprise entre 7,5 MHz et 13 MHz.

La présente invention concerne également un système de détection ultrasonore de défauts internes d'une pièce, en particulier pour un aéronef.

Selon l'invention, ledit système comporte au moins :
- un dispositif de mesure ultrasonore comprenant une pluralité d'émetteurs ultrasonores espacés les uns des autres et une pluralité de récepteurs ultrasonores espacés les uns des autres, le dispositif de mesure ultrasonore étant configuré pour réaliser des mesures sur une zone dite d'intérêt de la pièce, ladite zone d'intérêt étant divisée selon un maillage comprenant des cellules élémentaires, le dispositif de mesure ultrasonore étant configuré pour réaliser successivement cellule après cellule pour chacune des cellules du maillage une pluralité de suites d'opérations, lesdites suites d'opérations étant mises en œuvre successivement émetteur ultrasonore après émetteur ultrasonore à partir de chacun des émetteurs ultrasonores du dispositif de mesure ultrasonore, chacune des suites d'opérations comprenant les opérations suivantes : la génération par l'émetteur ultrasonore considéré d'un signal ultrasonore qui est envoyé dans la pièce et la mesure, par chacun des récepteurs ultrasonores du dispositif de mesure ultrasonore, de l'amplitude du signal ultrasonore renvoyé par la cellule considérée de la pièce ;
- un élément de calcul configuré pour calculer, pour chacune des cellules du maillage, la somme des amplitudes de l'ensemble des mesures réalisées pour cette cellule de manière à obtenir une amplitude dite globale pour ladite cellule ; et
- un élément de traitement configuré au moins pour déduire des amplitudes globales calculées pour l'ensemble des cellules du maillage, le cas échéant, la présence d'un ou de plusieurs défauts.

Dans un mode de réalisation préféré, le dispositif de mesure ultrasonore comporte une pluralité d'éléments ultrasonores, chacun desdits d'éléments ultrasonores comprenant un émetteur ultrasonore et un récepteur ultrasonore, et lesdits éléments ultrasonores sont agencés côte à côte le long d'une barrette linéaire.

De plus, de façon avantageuse, le dispositif de mesure ultrasonore comporte au moins 64 émetteurs ultrasonores et au moins 64 récepteurs ultrasonores.

Selon l'invention, le dispositif de mesure ultrasonore comporte une ligne à retard.

Par ailleurs, de façon avantageuse, le système comporte une unité de présentation des résultats des traitements mis en œuvre par l'élément de traitement.

Le système tel que décrit ci-dessus peut être utilisé dans différentes applications, notamment pour réaliser des vérifications de conformité de pièces, en particulier des pièces pour un aéronef, lors de leur fabrication, ou bien ultérieurement lors d'une opération de maintenance ou de contrôle.

### BRÈVE DESCRIPTION DES FIGURES

Les figures annexées feront bien comprendre comment l'invention peut être réalisée. Sur ces figures, des références identiques désignent des éléments semblables.
La figure 1 est le schéma synoptique d'un mode de réalisation particulier d'un système de détection ultrasonore.
La figure 2 est le schéma synoptique d'un dispositif de mesure ultrasonore du système de la figure 1.
La figure 3 est une vue partielle, en coupe, d'une pièce destinée à être analysée à l'aide du dispositif de détection ultrasonore.
La figure 4 illustre schématiquement un exemple de maillage d'une zone d'intérêt.
La figure 5 montre schématiquement les étapes principales d'un procédé de détection ultrasonore.
La figure 6 montre schématiquement des exemples de mesures de la variation de l'amplitude du signal ultrasonore renvoyé, pour une cellule donné du maillage de la zone d'intérêt.
La figure 7 représente une image illustrant le résultat des traitements réalisés sur une zone d'intérêt, cette image montrant la zone d'intérêt avec un défaut.

### DESCRIPTION DÉTAILLÉE

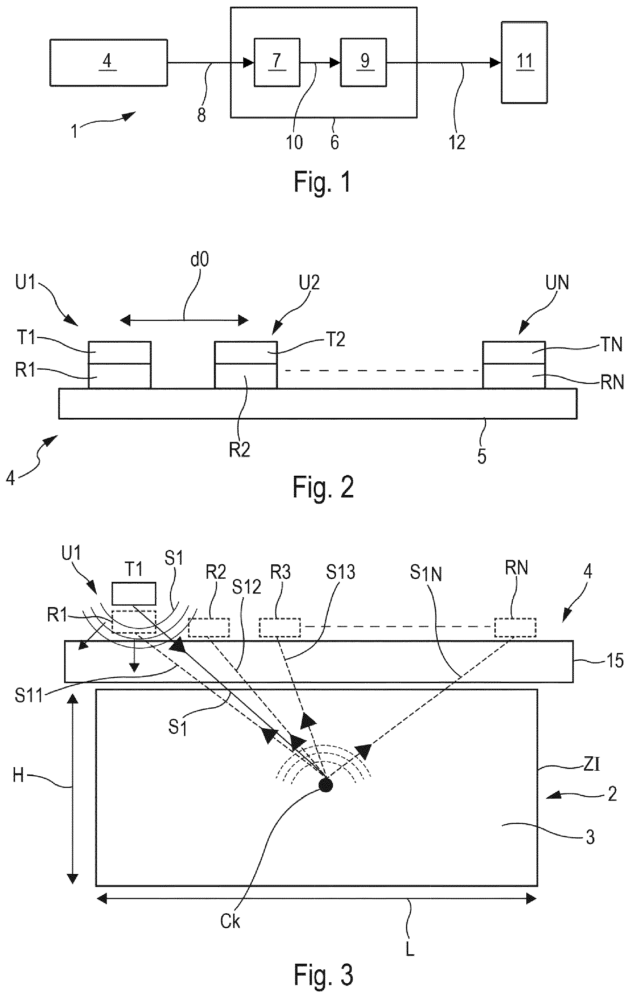

Le système 1 représenté schématiquement sur la figure 1 et permettant d'illustrer l'invention est un dispositif d'analyse de conformité d'un matériau 3 intégré dans une pièce 2 (figure 3), en particulier pour un aéronef.

Ce système 1 est destiné à détecter des défauts dans le matériau 3 de la pièce 2.

Dans le cadre de la présente invention, on entend par « défauts » internes d'une pièce, une absence au moins partielle de matière dans le matériau formant la pièce. Il peut notamment s'agir de défauts arrondis tels que par exemple des porosités ou de défauts linéaires tels que par exemple des manques de fusion.

Le système 1 est particulièrement adapté pour analyser une pièce 2 dont le matériau 3 a été déposé à l'aide d'une méthode usuelle de fabrication de type DED (pour "Direct Energy Deposition" en anglais).

Pour ce faire, le système 1 comporte, comme représenté sur la figure 1, un dispositif de mesure ultrasonore 4.

Ce dispositif de mesure ultrasonore 4 comprend, comme représenté sur la figure 2, une pluralité de N éléments ultrasonores U1, U2, ..., UN, N étant un entier précisé ci-dessous. Les N éléments ultrasonores U1, U2, ..., UN sont montés sur une barrette linéaire 5. Ils sont agencés côte à côte le long de la barrette linéaire 5, en étant espacés les uns des autres. De préférence, pour les N éléments ultrasonores U1, U2, ..., UN, deux éléments ultrasonores adjacents sont espacés à chaque fois, l'un de l'autre, d'une même distance (ou pas) d0.

Chacun des N éléments ultrasonores U1 à UN comprend un émetteur ultrasonore T1 à TN apte à générer, de façon usuelle, un signal ultrasonore et un récepteur ultrasonore R1 à RN apte à recevoir (et détecter), de façon usuelle, un signal ultrasonore.

Dans un mode de réalisation préféré, l'entier N est égal à 64 ou 128, et de préférence égal à 64. Dans ce cas, le dispositif de mesure ultrasonore 4 comporte donc 64 émetteurs ultrasonores et 64 récepteurs ultrasonores.

D'autres nombres N sont bien entendu possibles dans le cadre de la présente invention. De même, il est envisageable de disposer d'un nombre N1 d'émetteurs ultrasonores et d'un nombre N2 de récepteurs ultrasonores, N2 étant un entier différent de l'entier N1.

A titre d'illustration (non limitative), le dispositif de mesure ultrasonore 4 peut comprendre 64 éléments ultrasonores qui sont espacés les uns des autres d'un pas d0 compris entre 0,3 et 0,6 mm le long de la barrette linéaire 5.

Chacun des émetteurs ultrasonores T1 à TN est donc en mesure d'émettre un signal ultrasonore. Dans le cadre de la présente invention, on utilise les ondes longitudinales du signal ultrasonore pour l'émission et pour la réception.

Comme décrit plus en détail ci-dessous, chaque émetteur ultrasonore T1 à TN du dispositif de mesure ultrasonore 4 est configuré pour générer un signal ultrasonore Si et pour émettre le signal ultrasonore Si (ainsi généré) dans la pièce 2, comme illustré sur la figure 3 pour un signal S1 généré par l'émetteur ultrasonore T1. De préférence, le signal ultrasonore Si présente une fréquence comprise entre 7,5 MHz et 10 MHz.

En outre, chaque récepteur ultrasonore R1 à RN du dispositif de mesure ultrasonore 4 est configuré pour mesurer l'amplitude d'un signal ultrasonore Sij reçu, à savoir comme précisé ci-dessous l'amplitude de la partie du signal ultrasonore Si (émis par un émetteur ultrasonore T1 à TN), qui est renvoyée (après réflexion) par la pièce 2, comme précisé ci-dessous.

On sait que la propagation d'un signal ultrasonore dans une pièce (telle que la pièce 2) se caractérise, le cas échéant, par des pics (de réflexion) caractéristiques, qui correspondent à des ruptures d'impédance acoustique dans la pièce, aux interfaces de matériaux différents. Dans le cas où le matériau 3 est uniforme dans la pièce 2, des ruptures d'impédance acoustique sont générés, le cas échéant, à l'interface entre d'une part le matériau 3 et d'autre part une absence de matériau, c'est-à-dire un défaut tel que ceux précisés ci-dessus. Par conséquent, un signal ultrasonore émis dans le matériau (par un émetteur ultrasonore) est renvoyé par un défaut, s'il rencontre un tel défaut lors de sa propagation dans le matériau. Le signal ultrasonore ainsi renvoyé (et détecté par un récepteur ultrasonore) présente une amplitude importante caractéristique de la présence d'un tel défaut.

Le dispositif de mesure ultrasonore 4 est configuré pour réaliser des mesures sur une zone dite d'intérêt ZI de la pièce 2 représentée schématiquement sur la figure 3. La zone d'intérêt ZI correspond à une section transversale de la pièce 2. A titre d'illustration (non limitative), la zone d'intérêt ZI présente une largeur L de l'ordre de 25 mm et une profondeur H de l'ordre de 50 mm.

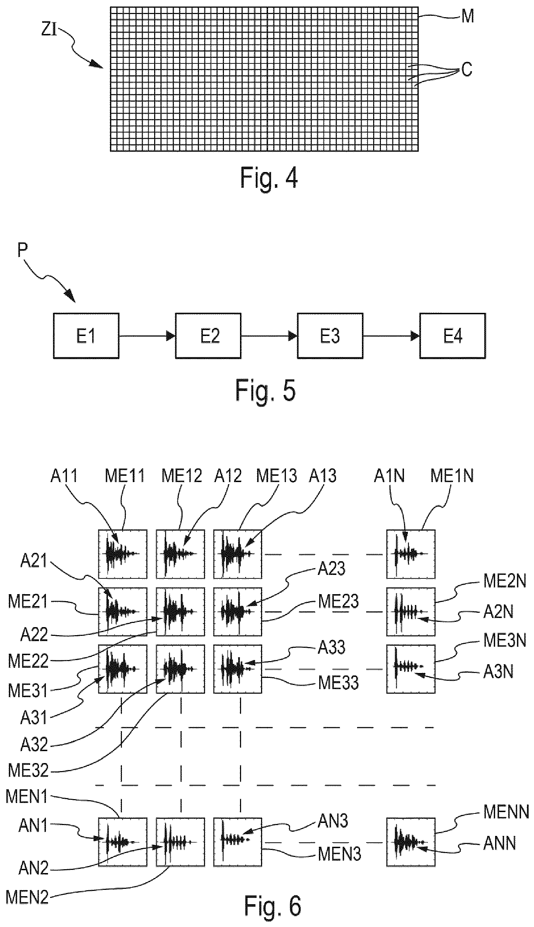

Dans le cadre de la présente invention, la zone d'intérêt ZI est divisée selon un maillage M comprenant des cellules C élémentaires, comme représenté sur la figure 4. Le dispositif de mesure ultrasonore 4 est configuré pour réaliser successivement, cellule après cellule, pour chacune des cellules C du maillage M, une pluralité de suites d'opérations.

Les suites d'opérations sont mises en œuvre successivement, émetteur ultrasonore après émetteur ultrasonore, à partir de chacun des émetteurs ultrasonores T1 à TN du dispositif de mesure ultrasonore 4. Chacune des suites d'opérations comprend, pour un émetteur ultrasonore donné, les opérations suivantes :
- la génération par l'émetteur ultrasonore d'un signal ultrasonore qui est envoyé dans la pièce 2 ; et
- la mesure, par chacun des récepteurs ultrasonores R1 à RN du dispositif de mesure ultrasonore 4 de l'amplitude du signal ultrasonore renvoyé par la cellule considérée de la pièce 2.

Ces opérations sont décrites plus en détail, ci-dessous, en référence à un procédé P de détection ultrasonore (figure 5).

Ledit système 1 comporte également, comme représenté sur la figure 1, une unité de traitement 6 réalisant le traitement des mesures réalisées par le dispositif de mesure ultrasonore 4. Cette unité de traitement 6 comprend :
- un élément de calcul 7 configuré pour calculer, pour chacune des cellules C du maillage M, la somme des amplitudes de l'ensemble des mesures réalisées pour la cellule considérée et reçues via une liaison 8 du dispositif de mesure ultrasonore 4 de manière à obtenir une amplitude dite globale pour ladite cellule ; et
- un élément de traitement 9 configuré au moins pour déduire des amplitudes globales calculées pour l'ensemble des cellules C du maillage M, et reçues via une liaison 10 de l'élément de calcul 7, le cas échéant, la présence d'un ou de plusieurs défauts. L'élément de traitement 9 peut mettre en œuvre d'autres traitements précisés ci-dessous.

En outre, selon l'invention, le dispositif de mesure ultrasonore 4 comporte une ligne à retard 15 comme représenté sur la figure 3. Cette ligne à retard 15 permet à un signal ultrasonore émis par un émetteur ultrasonore du dispositif de mesure ultrasonore 4, d'arriver avec un angle non nul par rapport à la normale, dans la pièce 2 à l'extrémité amont (dans le sens de propagation du signal ultrasonore). Cette ligne à retard 15 permet au dispositif de mesure ultrasonore 4 de pouvoir réaliser une inspection de la pièce 2 également à cette extrémité amont.

Par ailleurs, le système 1 comporte une unité 11 de présentation des résultats des traitements mis en œuvre par l'élément de traitement 9 de l'unité de traitement 6. Cette unité 11 est destinée à fournir à un opérateur ou à un système le résultat (reçu par une liaison 12) du traitement mis en œuvre par l'élément de traitement 9. Pour ce faire, l'unité 11 peut, notamment, comporter :
- un moyen usuel pour afficher le résultat (par exemple la localisation de défauts) ;
- un moyen usuel pour imprimer le résultat ; et
- un moyen usuel pour transmettre le résultat, par exemple via une liaison filaire ou une liaison non filaire.

Le système 1, tel que décrit ci-dessus, est apte à mettre en œuvre un procédé P d'analyse de conformité du matériau 3 d'une pièce 2, par exemple telle que celle représentée sur la figure 3. Ledit procédé P représenté schématiquement sur la figure 5 est décrit ci-dessous, en référence notamment aux figures 1, 3, 4, 6 et 7.

Le procédé P comprend, tout d'abord, une étape de mesure E1 (figure 5), mise en œuvre par le dispositif de mesure ultrasonore 4 (figure 1).

Cette étape de mesure E1 consiste à réaliser des mesures sur la zone d'intérêt ZI de la pièce 2 (figure 3), afin de l'analyser.

La zone d'intérêt ZI est donc divisée selon un maillage M comprenant des cellules C élémentaires, comme représenté sur la figure 4. La taille des cellules peut dépendre de la taille de la zone d'intérêt ZI et de la résolution des éléments ultrasonores U1 à UN. De préférence, les cellules C du maillage M sont carrées ; elles peuvent également être rectangulaires.

Dans un mode de réalisation préféré, le maillage M comporte des cellules C identiques de forme carrée, dont les côtés présentent une longueur supérieure à un dixième d'un critère dit d'acceptation. On entend par critère d'acceptation, la taille ou longueur maximale qui est acceptée pour un défaut de la pièce, par exemple 1 mm. Ce critère d'acceptation dépend, notamment, de la pièce considérée et de l'application envisagée.

L'étape de mesure E1 consiste à réaliser successivement, cellule C après cellule C, pour chacune des cellules C du maillage M, une pluralité de N suites d'opérations SO.

Pour l'une quelconque des cellules C, les N suites d'opérations SO sont mises en œuvre successivement, émetteur ultrasonore après émetteur ultrasonore, à partir de chacun des N émetteurs ultrasonores T1 à TN du dispositif de mesure ultrasonore 4.

Chacune des N suites d'opérations SO comprend les opérations suivantes :
- une opération d'émission correspondant à la génération par un émetteur ultrasonore Ti (i allant de 1 à N) d'un signal ultrasonore Si qui est envoyé dans la pièce 2, comme représenté à titre d'exemple sur la figure 3 pour un signal ultrasonore S1 envoyé dans la pièce 2 par l'émetteur ultrasonore T1 ; et
- N opérations de réception correspondant à la mesure, par chacun des N récepteurs ultrasonores T1 à TN du dispositif de mesure ultrasonore 4, de l'amplitude d'un signal ultrasonore Sij correspondant à la partie du signal ultrasonore Si (émis par un émetteur ultrasonore T1 à TN) qui est renvoyée (après réflexion) par la cellule considérée de la pièce. A titre d'illustration, on a représenté sur la figure 3 des signaux S11, S12, S13 et S1N qui correspondent à la réflexion par une cellule Ck du signal ultrasonore S1 (émis par l'émetteur ultrasonore T1). Ces signaux S11, S12, S13 et S1N sont mesurés, respectivement, par les récepteurs ultrasonores R1, R2, R3 et RN.

On obtient par conséquent, pour une cellule C donnée (telle que la cellule Ck de la figure 3 par exemple), N mesures pour chacun des N émetteurs ultrasonores (telles que les N mesures précitées relatives à l'émetteur ultrasonore T1). On obtient donc NxN mesures pour chaque cellule C. Chacune de ces NxN mesures comprend l'amplitude du signal sonore mesurée par le récepteur ultrasonore correspondant.

A titre d'illustration, on a représenté sur la figure 6, pour une cellule C donnée du maillage M, certaines des amplitudes Aij des NxN mesures MEij réalisées pour cette cellule, à savoir celles pour lesquelles i et j prennent les valeurs 1, 2, 3 et N. Chacune des mesures MEij comprend donc une mesure de type « A-Scan ».

Le procédé P comprend également une étape de calcul E2, mise en œuvre par l'élément de calcul 7. Cette étape de calcul E2 consiste à calculer, pour chacune des cellules C du maillage M, la somme des amplitudes Aij de l'ensemble des mesures MEij réalisées à l'étape de mesure E1 pour cette cellule.

Par cette sommation, l'étape de calcul E2 permet obtenir une amplitude dite globale pour chacune des cellules C du maillage M.

Le procédé P comprend également une étape de traitement E3, mise en œuvre par l'élément de traitement 9, après l'étape de calcul E2.

Cette étape de traitement E3 consiste à déduire des amplitudes globales calculées pour l'ensemble des cellules du maillage, le cas échéant, la présence d'un ou de plusieurs défauts. Un défaut est considéré comme détecté dans une cellule lorsque l'amplitude globale (c'est-à-dire la somme des amplitudes mesurées) de cette cellule dépasse un seuil prédéterminé.

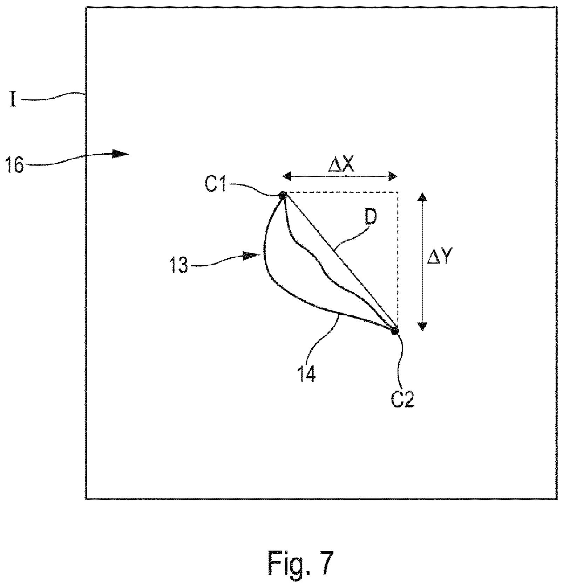

Dans un mode de réalisation préféré, l'étape de traitement E3 consiste à déterminer, en cas de détection d'un défaut, en fonction des amplitudes globales des cellules détectant un défaut, le contour 14 du défaut 13 dans le plan de la zone d'intérêt, comme représenté sur la figure 7.

La figure 7 montre une image I illustrant le résultat des traitements réalisés sur une zone d'intérêt ZI. Cette image I (de la zone d'intérêt analysée) comprend un seul défaut 13.

De plus, à l'étape de traitement E3, l'élément de traitement 9 peut également calculer la longueur D d'un défaut identifié. Pour ce faire, comme représenté sur la figure 7, l'élément de traitement 9 calcule la longueur D du défaut 13 à partir de la longueur entre les deux cellules C1 et C2 les plus éloignées entre elles, parmi l'ensemble des cellules sur lesquelles a été détecté le défaut 13. A cet effet, l'élément de traitement 9 peut déterminer une distance ΔX (selon les lignes du maillage) ainsi qu'une distance ΔY (selon les colonnes du maillage) entre les cellules C1 et C2, puis calculer la distance L à partir de ces deux distances ΔX et ΔY.

Le procédé P comporte, de plus, une étape E4, mise en œuvre par l'unité 11, consistant à présenter et/ou à transmettre à un opérateur ou à un système, une partie ou l'ensemble des résultats (identification du défaut 13, présentation du contour 14 du défaut 13, valeur de la longueur D du défaut 13, ...) obtenus à l'étape de traitement E3. La présentation peut être réalisée par différents moyens usuels sous forme d'affichage ou d'impression.

Dans un mode de réalisation particulier, on peut réaliser une cartographie de la structure analysée en y mettant en évidence les défauts par l'intermédiaire d'une ou plusieurs couleurs particulières. Cette cartographie peut ressembler à l'image I de la figure 7, sur laquelle on représente avec des couleurs différentes le fond 16 (dépourvu de défauts) de la zone d'intérêt analysée et le défaut 13. Ce mode de réalisation particulier permet à un opérateur d'identifier et de localiser, rapidement, de façon visuelle, les éventuels défauts.

Le système 1 mettant en œuvre le procédé P tel que décrit ci-dessus, permet ainsi une détection efficace de tous les défauts existant dans une zone d'intérêt d'une pièce, et ceci quelle que soit l'orientation spatiale de ce ou de ces défauts.

En effet, grâce au maillage M de la zone d'intérêt ZI et à la réalisation de mesures dans toutes les cellules C de ce maillage M, le système 1 obtient des données pour toute la surface de la zone d'intérêt ZI considérée, c'est-à-dire de la zone de la pièce 2 que l'on souhaite inspecter. De plus, grâce à un agencement espacé des éléments ultrasonores U1 à UN le long de la barrette linéaire 5 et au traitement de données obtenues à partir de tous les émetteurs ultrasonores et de tous les récepteurs ultrasonores agencés donc à des positions différentes sur la barrette linéaire 5 du dispositif de mesure ultrasonique 4, le système 1 obtient, pour chaque cellule C, des mesures réalisées selon des angles d'émission et de réception différents et variés. Ceci permet d'obtenir une image ultrasonore de chaque cellule C sous des vues différentes. Le système 1 est ainsi en mesure de détecter des défauts (dans la pièce 2), qui présentent différentes orientations, et plus généralement toute orientation possible.

Le système 1 (de détection ultrasonore) permet donc de détecter tous les défauts existant dans la zone d'intérêt ZI de la pièce 2, et ceci quelle que soit l'orientation spatiale et la forme de ce défaut ou de ces défauts. Ledit système 1 est particulièrement bien adapté à détecter des défauts linéaires générés lors de la mise en œuvre d'une méthode de fabrication de type DED. Toutefois, ce procédé peut également être utilisé pour détecter des défauts dans d'autres types de pièces, par exemple des soudures.

Le système 1, tel que décrit ci-dessus, peut être utilisé dans différentes applications.

En particulier, dans une première application possible, le système 1 est utilisé pour réaliser des vérifications de conformité lors de la fabrication d'une pièce, par exemple d'un aéronef, et notamment lors de la fabrication d'une pièce par une méthode de fabrication de type DED. Le système 1 permet dans cette application de réaliser une vérification précise, rapide et fiable du matériau tel que déposé de la pièce de manière à pouvoir détecter la présence de défauts.

Dans une seconde application possible, les mesures peuvent être réalisées au cours d'une opération d'assemblage, ou lors d'une vérification ultérieure avec la pièce déjà montée, par exemple lors d'une opération de maintenance. Dans une telle application, le système 1 peut notamment être utilisé pour réaliser des mesures à des endroits particuliers de la pièce, par exemple à un ou plusieurs endroits où l'on estime qu'un défaut puisse exister.

## Revendications

1. Procédé de détection ultrasonore de défauts internes d'une pièce, en particulier pour un aéronef, ledit procédé comportant au moins les étapes suivantes :
- une étape de mesure (E1), mise en œuvre par un dispositif de mesure ultrasonore (4), consistant à réaliser des mesures sur une zone dite d'intérêt (ZI) de la pièce (2), ladite zone d'intérêt (ZI) étant divisée selon un maillage (M) comprenant des cellules (C) élémentaires, le maillage (M) comprenant des cellules (C) identiques de forme carrée, le dispositif de mesure ultrasonore (4) comportant une pluralité d'émetteurs ultrasonores (T1 à TN) espacés les uns des autres et une pluralité de récepteurs ultrasonores (R1 à RN) espacés les uns des autres, le dispositif de mesure ultrasonore (4) comportant une ligne à retard (15),
l'étape de mesure (E1) consistant à réaliser successivement, cellule (C) après cellule (C), pour chacune des cellules (C) du maillage (M), une pluralité de suites d'opérations, lesdites suites d'opérations étant mises en œuvre successivement, émetteur ultrasonore (T1 à TN) après émetteur ultrasonore (T1 à TN), à partir de chacun des émetteurs ultrasonores (T1 à TN) du dispositif de mesure ultrasonore (4),
chacune des suites d'opérations comprenant les opérations suivantes : la génération par l'émetteur ultrasonore considéré d'un signal ultrasonore qui est envoyé dans la pièce (2) et la mesure, par chacun des récepteurs ultrasonores (R1 à RN) du dispositif de mesure ultrasonore (4), de l'amplitude du signal ultrasonore correspondant, renvoyé par la cellule (C) considérée de la pièce (2) ;
- une étape de calcul (E2), mise en œuvre par un élément de calcul (7), consistant à calculer, pour chacune des cellules (C) du maillage (M), la somme des amplitudes de l'ensemble des mesures réalisées à l'étape de mesure (E1) pour cette cellule (C) de manière à obtenir une amplitude dite globale pour ladite cellule (C) ; et
- une étape de traitement (E3), mise en œuvre par un élément de traitement (9), consistant au moins à déduire des amplitudes globales calculées pour l'ensemble des cellules (C) du maillage (M), le cas échéant, la présence d'un ou de plusieurs défauts (13).

2. Procédé selon la revendication 1,
**caractérisé en ce que** l'étape de traitement (E3) consiste également à déterminer, le cas échéant, en fonction des amplitudes globales calculées pour l'ensemble des cellules (C) du maillage (M), le contour (14) d'un défaut (13) dans le plan de la zone d'intérêt (ZI).

3. Procédé selon l'une des revendications 1 et 2,
**caractérisé en ce que** l'étape de traitement (E3) consiste également à calculer, le cas échéant, la longueur d'un défaut (13) à partir de la longueur (D) entre les deux cellules (C1, C2) les plus éloignées entre elles, parmi l'ensemble des cellules pour lesquelles a été détecté le défaut (13).

4. Procédé selon l'une quelconque des revendications précédentes,
**caractérisé en ce que** l'étape de mesure (E1) consiste à générer un signal ultrasonore présentant une fréquence comprise entre 7,5 MHz et 13 MHz.

5. Système de détection ultrasonore de défauts internes d'une pièce, en particulier pour un aéronef, ledit système (1) comportant au :
- un dispositif de mesure ultrasonore (4) comprenant une pluralité d'émetteurs ultrasonores (T1 à TN) espacés les uns des autres et une pluralité de récepteurs ultrasonores (R1 à RN) espacés les uns des autres, le dispositif de mesure ultrasonore (4) étant configuré pour réaliser des mesures sur une zone dite d'intérêt (ZI) de la pièce (2), ladite zone d'intérêt (ZI) étant divisée selon un maillage (M) comprenant des cellules (C) élémentaires, le maillage (M) comprenant des cellules (C) identiques de forme carrée, , le dispositif de mesure ultrasonore (4) étant configuré pour réaliser successivement cellule (C) après cellule (C) pour chacune des cellules (C) du maillage (M) une pluralité de suites d'opérations, lesdites suites d'opérations étant mises en œuvre successivement émetteur ultrasonore (T1 à TN) après émetteur ultrasonore (T1 à TN) à partir de chacun des émetteurs ultrasonores (T1 à TN) du dispositif de mesure ultrasonore (4), chacune des suites d'opérations comprenant les opérations suivantes : la génération par l'émetteur ultrasonore considéré d'un signal ultrasonore qui est envoyé dans la pièce et la mesure, par chacun des récepteurs ultrasonores (R1 à RN) du dispositif de mesure ultrasonore (4), de l'amplitude du signal ultrasonore renvoyé par la cellule considérée de la pièce (2), le dispositif de mesure ultrasonore (4) comportant une ligne à retard (15) ;
- un élément de calcul (7) configuré pour calculer, pour chacune des cellules (C) du maillage (M), la somme des amplitudes de l'ensemble des mesures réalisées pour cette cellule (C) de manière à obtenir une amplitude dite globale pour ladite cellule ; et
- un élément de traitement (9) configuré au moins pour déduire des amplitudes globales calculées pour l'ensemble des cellules (C) du maillage (M), le cas échéant, la présence d'un ou de plusieurs défauts (13).

6. Système selon la revendication 5,
**caractérisé en ce que** le dispositif de mesure ultrasonore (4) comporte une pluralité d'éléments ultrasonores (U1 à UN), chacun desdits d'éléments ultrasonores (U1 à UN) comprenant un émetteur ultrasonore (T1 à TN) et un récepteur ultrasonore (R1 à RN), et **en ce que** lesdits éléments ultrasonores (U1 à UN) sont agencés côte à côte le long d'une barrette linéaire (5).

7. Système selon l'une des revendications 5 et 6,
**caractérisé en ce que** le dispositif de mesure ultrasonore (4) comporte au moins 64 émetteurs ultrasonores et au moins 64 récepteurs ultrasonores.

8. Système selon l'une quelconque des revendications 5 à 7,
**caractérisé en ce qu'**il comporte une unité (11) de présentation des résultats des traitements mis en œuvre par l'élément de traitement (9).

## Patentansprüche

1. Verfahren zur Ultraschallerkennung von inneren Defekten eines Werkstücks, insbesondere für ein Luftfahrzeug, wobei das Verfahren mindestens die folgenden Schritte umfasst:
- einen Messschritt (E1), der durch eine Ultraschallmessvorrichtung (4) implementiert wird, der darin besteht, Messungen an einer sogenannten Zone von Interesse (ZI) des Werkstücks (2) durchzuführen, wobei die Zone von Interesse (ZI) gemäß einem Maschennetz (M) unterteilt ist, das Elementarzellen (C) umfasst, wobei das Maschennetz (M) identische Zellen (C) mit quadratischer Form umfasst, wobei die Ultraschallmessvorrichtung (4) eine Vielzahl von voneinander beabstandeten Ultraschallsendern (T1 bis TN) und eine Vielzahl von voneinander beabstandeten Ultraschallempfängern (R1 bis RN) aufweist, wobei die Ultraschallmessvorrichtung (4) eine Verzögerungsleitung (15) aufweist,
wobei der Messschritt (E1) darin besteht, nacheinander, Zelle (C) für Zelle (C), für jede der Zellen (C) des Maschennetzes (M) eine Vielzahl von Abfolgen von Vorgängen auszuführen, wobei die Abfolgen von Vorgängen nacheinander, Ultraschallsender (T1 bis TN) für Ultraschallsender (T1 bis TN), ausgehend von jedem der Ultraschallsender (T1 bis TN) der Ultraschallmessvorrichtung (4) implementiert werden,
wobei jede der Abfolgen von Vorgängen die folgenden Vorgänge umfasst: Erzeugen eines Ultraschallsignals durch den betreffenden Ultraschallsender, das in das Werkstück (2) gesendet wird, und Messen der Amplitude des entsprechenden Ultraschallsignals, das von der betreffenden Zelle (C) des Werkstücks (2) zurückgesendet wird, durch jeden der Ultraschallempfänger (R1 bis RN) der Ultraschallmessvorrichtung (4);
- einen Berechnungsschritt (E2), der von einem Berechnungselement (7) implementiert wird, der darin besteht, dass für jede der Zellen (C) des Maschennetzes (M) die Summe der Amplituden der Gesamtheit der im Messschritt (E1) für diese Zelle (C) durchgeführten Messungen berechnet wird, um eine sogenannte Globalamplitude für die Zelle (C) zu erhalten; und
- einen Behandlungsschritt (E3), der durch ein Behandlungselement (9) implementiert wird, der mindestens darin besteht, dass aus den für die Gesamtheit der Zellen (C) des Maschennetzes (M) berechneten Globalamplituden gegebenenfalls das Vorhandensein eines oder mehrerer Defekte (13) abgeleitet wird.

2. Verfahren nach Anspruch 1,
**dadurch gekennzeichnet, dass** der Behandlungsschritt (E3) auch darin besteht, dass gegebenenfalls in Abhängigkeit von den für die Gesamtheit der Zellen (C) des Maschennetzes (M) berechneten Globalamplituden die Kontur (14) eines Defekts (13) in der Ebene der Zone von Interesse (ZI) bestimmt wird.

3. Verfahren nach einem der Ansprüche 1 und 2,
**dadurch gekennzeichnet, dass** der Behandlungsschritt (E3) auch darin besteht, dass gegebenenfalls die Länge eines Defekts (13) aus der Länge (D) zwischen den zwei Zellen (C1, C2) berechnet wird, die unter der Gesamtheit der Zellen, für die der Defekt (13) erkannt wurde, am weitesten voneinander entfernt sind.

4. Verfahren nach einem der vorstehenden Ansprüche,
**dadurch gekennzeichnet, dass** der Messschritt (E1) darin besteht, dass ein Ultraschallsignal erzeugt wird, das eine Frequenz zwischen 7,5 MHz und 13 MHz aufweist.

5. System zur Ultraschallerkennung von inneren Defekten eines Werkstücks, insbesondere für ein Luftfahrzeug, wobei das System (1) umfasst:
- eine Ultraschallmessvorrichtung (4), die eine Vielzahl von voneinander beabstandeten Ultraschallsendern (T1 bis TN) und eine Vielzahl von voneinander beabstandeten Ultraschallempfängern (R1 bis RN) umfasst, wobei die Ultraschallmessvorrichtung (4) dazu konfiguriert ist, Messungen an einer sogenannten Zone von Interesse (ZI) des Werkstücks (2) durchzuführen, wobei die Zone von Interesse (ZI) gemäß einem Maschennetz (M) unterteilt ist, das Elementarzellen (C) umfasst, wobei das Maschennetz (M) identische Zellen (C) mit quadratischer Form umfasst, wobei die Ultraschallmessvorrichtung (4) dazu konfiguriert ist, nacheinander, Zelle (C) für Zelle (C), für jede der Zellen (C) des Maschennetzes (M) eine Vielzahl von Abfolgen von Vorgängen durchzuführen, wobei die Abfolgen von Vorgängen nacheinander, Ultraschallsender (T 1 bis TN) nach Ultraschallsender (T 1 bis TN), ausgehend von jedem der Ultraschallsender (T 1 bis TN) der Ultraschallmessvorrichtung (4) implementiert werden, wobei jede der Abfolgen von Vorgängen die folgenden Vorgänge umfasst: Erzeugen eines Ultraschallsignals durch den betreffenden Ultraschallsender, das in das Werkstück gesendet wird und Messen der Amplitude des von der betreffenden Zelle des Werkstücks (2) zurücksendenden Ultraschallsignals durch jeden der Ultraschallempfänger (R1 bis RN) der Ultraschallmessvorrichtung (4), wobei die Ultraschallmessvorrichtung (4) eine Verzögerungsleitung (15) umfasst;
- ein Berechnungselement (7), das dazu konfiguriert ist, für jede der Zellen (C) des Maschennetzes (M) die Summe der Amplituden der Gesamtheit der für diese Zelle (C) durchgeführten Messungen zu berechnen, um eine sogenannte Globalamplitude für die Zelle zu erhalten; und
- ein Behandlungselement (9), das mindestens dazu konfiguriert ist, um aus den für die Gesamtheit der Zellen (C) des Maschennetzes (M) berechneten Globalamplituden gegebenenfalls das Vorhandensein eines oder mehrerer Defekte (13) abzuleiten.

6. System nach Anspruch 5,
**dadurch gekennzeichnet, dass** die Ultraschallmessvorrichtung (4) eine Vielzahl von Ultraschallelementen (U1 bis UN) aufweist, wobei jedes der Ultraschallelemente (U1 bis UN) einen Ultraschallsender (T1 bis TN) und einen Ultraschallempfänger (R1 bis RN) umfasst, und dass die Ultraschallelemente (U1 bis UN) Seite an Seite entlang einer linearen Leiste (5) angeordnet sind.

7. System nach einem der Ansprüche 5 und 6,
**dadurch gekennzeichnet, dass** die Ultraschallmessvorrichtung (4) mindestens 64 Ultraschallsender und mindestens 64 Ultraschallempfänger aufweist.

8. System nach einem der Ansprüche 5 bis 7,
**dadurch gekennzeichnet, dass** es eine Einheit (11) zur Darstellung der Resultate der vom Behandlungselement (9) implementierten Behandlungen aufweist.

## Claims

1. A method for an ultrasonic detection of internal defects of a component, in particular for an aircraft, said method comprising at least the following steps:
- a measuring step (E1), implemented by an ultrasonic measuring device (4), consisting of carrying out measurements on a so-called zone of interest (ZI) of the component (2), said zone of interest (ZI) being divided according to a gridding (M) comprising elementary cells (C), the gridding (M) comprising identical square-shaped cells (C), the ultrasonic measuring device (4) comprising a plurality of ultrasonic transmitters (T1 to TN) spaced from each other and a plurality of ultrasonic receivers (R1 to RN) spaced from each other, the ultrasonic measuring device (4) comprising a delay line (15),
the measuring step (E1) consisting of successively carrying out, cell (C) after cell (C), for each of the cells (C) of the gridding (M), a plurality of successions of operations,
said successions of operations being implemented successively, ultrasonic transmitter (T1 to TN) after ultrasonic transmitter (T1 to TN), from each of the ultrasonic transmitters (T1 to TN) of the ultrasonic measuring device (4),
each of the successions of operations comprising the following operations: the generation by the ultrasonic transmitter in question of an ultrasonic signal which is sent into the component (2) and the measurement, by each of the ultrasonic receivers (R1 to RN) of the ultrasonic measuring device (4), of the amplitude of the corresponding ultrasonic signal, reflected by the cell (C) in question of the component (2);
- a computing step (E2), implemented by a computing unit (7), consisting of computing, for each of the cells (C) of the gridding (M), the sum of the amplitudes of all of the measurements carried out in the measuring step (E1), for that cell (C), in order to obtain a so-called overall amplitude for said cell (C); and
- a processing step (E3), implemented by a processing part (9), consisting of at least deducing from the overall amplitudes computed for all of the cells (C) of the gridding (M), as the case may be, the presence of one or more defects (13).

2. The method as claimed in claim 1,
**characterized in that** the processing step (E3) also consists of determining, if appropriate, the contour (14) of a defect (13) in the plane of the zone of interest (ZI) as a function of the overall amplitudes computed for all of the cells (C) of the gridding (M).

3. The method as claimed in one of claims 1 and 2,
**characterized in that** the processing step (E3) also consists of computing, if appropriate, the length of a defect (13) from the length (D) between the two cells (C1, C2) most distant from each other among all of the cells for which the defect (13) has been detected.

4. The method as claimed in any one of the preceding claims,
**characterized in that** the measuring step (E1) consists of generating an ultrasonic signal having a frequency of between 7.5 MHz and 13 MHz.

5. A system for an ultrasonic detection of internal defects of a component, in particular for an aircraft, said system (1) comprising at least:
- an ultrasonic measuring device (4) comprising a plurality of ultrasonic transmitters (T1 to TN) spaced from each other and a plurality of ultrasonic receivers (R1 to RN) spaced from each other, the ultrasonic measuring device (4) being configured to carry out measurements on a so-called zone of interest (ZI) of the component (2), said zone of interest (ZI) being divided according to a gridding (M) comprising elementary cells (C), the gridding (M) comprising identical square-shaped cells (C), the ultrasonic measuring device (4) being configured for successively carrying out, cell (C) after cell (C) for each of the cells (C) of the gridding (M), a plurality of successions of operations, said successions of operations being implemented successively, ultrasonic transmitter (T1 to TN) after ultrasonic transmitter (T1 to TN), from each of the ultrasonic transmitters (T1 to TN) of the ultrasonic measuring device (4), each of the successions of operations comprising the following operations: the generation by the ultrasonic transmitter in question of an ultrasonic signal which is sent into the component and the measurement, by each of the ultrasonic receivers (R1 to RN) of the ultrasonic measuring device(4), of the amplitude of the ultrasonic signal reflected by the cell in question of the component (2), the ultrasonic measuring device (4) comprising a delay line (15);
- a computing unit (7) configured for computing, for each of the cells (C) of the gridding (M), the sum of the amplitudes of all of the measurements carried out for that cell (C) in order to obtain a so-called overall amplitude for said cell (C); and
- a processing part (9) configured at least for deducing, from the computed overall amplitudes computed for all of the cells (C) of the gridding (M), as the case may be, the presence of one or more defects (13).

6. The system as claimed in claim 5,
**characterized in that** the ultrasonic measuring device (4) comprises a plurality of ultrasonic units (U1 to UN), each of said ultrasonic units (U1 to UN) comprising an ultrasonic transmitter (T1 to TN) and an ultrasonic receiver (R1 to RN), and wherein said ultrasonic units (U1 to UN) are arranged side by side along a linear bar (5).

7. The system as claimed in one of claims 5 and 6,
**characterized in that** the ultrasonic measuring device (4) comprises at least 64 ultrasonic transmitters and at least 64 ultrasonic receivers.

8. The system a claimed in any one of claims 5 to 7,
**characterized in that** it comprises a unit (11) for the presentation of the results of the processings implemented by the processing part (9).
